# DEMANDE DE BREVET EUROPEEN

(11) **EP 1 770 524 A2**
(43) Date de publication de la demande: **04.04.2007**
(21) Numéro de dépôt: 06114270.9
(22) Date de dépôt: 19.05.2006
(51) Int. Cl.: G06F 11/28

(54) **Détection d'erreur de séquencement dans l'exécution d'un programme**

(30) Priorité: 20.05.2005 FR 0551307
(71) Demandeur: PROTON WORLD INTERNATIONAL N.V., 1930 ZAVENTEM (BE)
(72) Inventeur: Modave, Jean-Louis, 1340, Ottignies (BE); Van Keer, Ronny, 1560, Hoeilaart (BE)
(74) Mandataire: de Beaumont, Michel

(57) **Abrégé**

L'invention concerne le contrôle automatique de l'exécution d'un programme par un microprocesseur (2), consistant à : mémoriser un état initial d'un compteur avant l'exécution d'au moins une instruction (INSTR) consistant à exécuter un nombre de fois donné (n) au moins une même opération (OPi) ; à chaque exécution de l'opération, incrémenter ou décrémenter le compteur d'un poids (WEIGHTi) affecté à l'opération ; et en fin d'instruction, comparer l'état final du compteur à une valeur (LCOUNT) estimée en majorant, respectivement minorant, son état initial d'un multiple du poids affecté à l'opération correspondant au nombre d'exécutions prévu de cette opération dans l'instruction.

## Description

### Domaine de l'invention

La présente invention concerne, de façon générale, l'exécution de programmes (codes logiciels) par un microprocesseur. L'invention concerne plus particulièrement le contrôle de l'intégrité d'un programme lors de son exécution afin de vérifier qu'il est exécuté avec un séquencement normal.

### Exposé de l'art antérieur

Lorsqu'un programme est exécuté par un microprocesseur, il est souhaitable de pouvoir détecter que le séquencement normal du programme est respecté. Une modification dans ce fonctionnement peut être accidentel ou volontaire et provenir, par exemple, d'un virus informatique ou d'une tentative de piratage consistant, plus particulièrement, en des injections de fautes dans l'exécution du programme.

Une attaque par injection de fautes, par exemple dite de déroutement, peut consister en l'introduction d'une perturbation susceptible de provoquer un saut inopiné dans la séquence d'exécution du programme (par exemple, au moyen d'une perturbation thermique, lumineuse, de l'alimentation du composant, etc.).

Une attaque par injection de faute appliquée pendant l'exécution d'un algorithme d'authentification peut consister à faire sauter le compteur programme afin de provoquer un saut dans la séquence d'exécution et sortir alors d'un blocage (par exemple, une boucle sans fin) provoqué par l'algorithme suite à un défaut d'authentification. Un exemple d'application d'une telle attaque est le cas d'un processeur devant décider si une opération particulière est autorisée (par exemple, dans le cas de cartes bancaires, l'autorisation d'une transaction bancaire après authentification de l'utilisateur).

Une attaque par injection de faute appliquée pendant l'exécution d'un algorithme de chiffrement ou de cryptographie (DSA, RSA, DES, AES, etc.) peut servir, combinée à une analyse des résultats (partiels ou complets) fournis par le composant (par exemple, par une analyse de sa consommation) à découvrir des quantités secrètes.

Selon un autre aspect, un fraudeur cherche à modifier le séquencement d'un programme lors de son exécution pour détourner l'application exécutée par le microprocesseur (par exemple, contenu dans une carte à puce) afin de prolonger frauduleusement une durée d'utilisation gérée par le microprocesseur (titre de transport ou télévision à péage, par exemple). Dans ce cas, cela revient tantôt à modifier l'ordre de commande reçu par le processeur de la carte, tantôt à insérer des commandes anormales dans des sessions de communication avec la carte.

Selon l'application, le programme à protéger est contenu dans une mémoire morte (ROM) inscrite à la fabrication et non modifiable ou dans une mémoire non volatile réinscriptible, par exemple, une mémoire flash.

Pour protéger le code logiciel lors de son exécution, on prévoit généralement une vérification périodique de ce code à partir d'une clé d'authentification stockée dans une mémoire ou de façon matérielle dans le circuit intégré, par exemple lors du stockage initial du programme ou de son installation. Par exemple, on calcule une signature (application d'un algorithme de chiffrement à au moins une partie du code logiciel) lors de l'installation ou de l'écriture du programme. Cette signature est ensuite stockée dans ou hors du microcontrôleur. Puis, lors de l'exécution du code logiciel, le système d'exploitation recalcule une signature sur la base du même algorithme que celui ayant servi à la génération de la signature initiale. On compare alors la signature courante avec la signature prédéterminée. Une divergence entre ces deux signatures signifie que le programme stocké a été modifié et permet donc d'identifier une attaque potentielle, involontaire ou accidentelle. Un exemple d'un tel procédé de vérification d'intégrité est décrit dans le brevet américain N° 5442645.

Un inconvénient des solutions connues à signature est que la vérification d'intégrité est statique, c'est-à-dire qu'au début du programme, on vérifie si la signature est bien autorisée. Par conséquent, un tel système de protection est en pratique inefficace en cas d'injection de faute pendant l'exécution du programme.

Une autre solution connue pour contrôler l'exécution d'un programme est d'effectuer certaines opérations doubles, de façon à disposer d'une redondance sur les données pour vérifier la cohérence entre les deux exécutions.

Un inconvénient commun aux techniques connues exposées ci-dessus est qu'elles sont gourmandes en ressources de calcul. Par conséquent, elles sont inadaptées à des microcontrôleurs de faible puissance, comme par exemple ceux disponibles dans des cartes à puce.

### Résumé de l'invention

La présente invention vise à pallier tout ou partie des inconvénients des solutions connues de contrôle d'exécution d'un programme et, plus particulièrement, à permettre une vérification dynamique, c'est-à-dire qui détecte les erreurs dans le séquencement d'un programme lors de son exécution.

L'invention vise également à éviter que le résultat d'un calcul de signature ait à être connu à l'avance par le microcontrôleur.

L'invention vise également à ne pas requérir de mise à jour de signature d'authentification à chaque mise à jour du code logiciel à protéger.

L'invention vise également à être compatible avec une exécution sur un microcontrôleur de puissance limitée de type carte à puce.

L'invention vise également, selon un aspect préféré, à rendre la vérification indépendante du programme lui-même en ne requérant aucune intervention de programmation sur le procédé de détection d'erreur en cas de modification du programme à surveiller.

Pour atteindre tout ou partie de ces objets ainsi que d'autres, la présente invention prévoit un procédé de contrôle automatique de l'exécution d'un programme par un microprocesseur, consistant à :
mémoriser un état initial d'un compteur avant l'exécution d'au moins une instruction consistant à exécuter un nombre de fois donné au moins une même opération ;
à chaque exécution de l'opération, incrémenter ou décrémenter le compteur d'un poids affecté à l'opération ; et
en fin d'instruction, comparer l'état final du compteur à une valeur estimée en majorant, respectivement minorant, son état initial d'un multiple du poids affecté à l'opération correspondant au nombre d'exécutions prévu de cette opération dans l'instruction.

Selon un mode de mise en oeuvre de la présente invention, ladite valeur estimée est obtenue indépendamment de l'exécution de l'instruction.

Selon un mode de mise en oeuvre de la présente invention, les poids affectés à différentes opérations sont choisis pour être des nombres premiers entre eux.

Selon un mode de mise en oeuvre de la présente invention, ledit compteur n'est pas initialisé au début d'une instruction.

Selon un mode de mise en oeuvre de la présente invention, le nombre d'exécutions de l'opération correspond aux nombres d'octets devant être traités par l'opération pour exécuter l'instruction sur un mot de plusieurs octets.

La présente invention prévoit également un microcontrôleur comportant au moins un microprocesseur.

La présente invention prévoit également une carte à puce comprenant un microcontrôleur.

### Brève description des dessins

Ces objets, caractéristiques et avantages, ainsi que d'autres de la présente invention seront exposés en détail dans la description suivante de modes de réalisation particuliers faite à titre non-limitatif en relation avec les figures jointes parmi lesquelles :
la figure 1 représente, de façon très schématique et sous forme de blocs, un exemple de microcontrôleur auquel s'applique plus particulièrement la présente invention ;
la figure 2 illustre, de façon très schématique et sous forme de blocs, un mode de mise en oeuvre du procédé de détection d'erreurs dans l'exécution d'un programme selon la présente invention ;
la figure 3 est un organigramme simplifié d'un premier exemple de mise en oeuvre du procédé illustré par la figure 2 ; et
la figure 4 est un organigramme simplifié d'un deuxième exemple de mise en oeuvre du procédé de la figure 2.

Les mêmes éléments ont été désignés par les mêmes références aux différentes figures. Par souci de clarté, seuls les éléments et étapes nécessaires à la compréhension de l'invention ont été représentés et seront décrits par la suite. En particulier, les opérateurs ou instructions concernés par la mise en oeuvre de l'invention n'ont pas été détaillés, l'invention s'appliquant quel que soit le type d'opérateurs ou d'instructions. De plus, tous les constituants nécessaires à l'exécution d'un programme, que ce soit pour une mise en oeuvre logicielle ou au moyen d'une machine d'états en logique câblée, n'ont pas été détaillés, leur réalisation faisant appel à des éléments classiques.

### Description détaillée

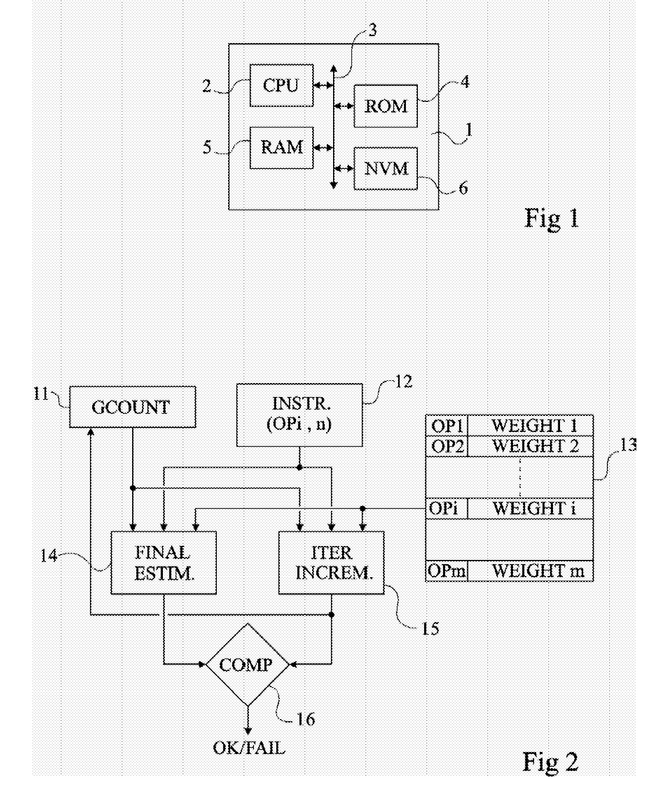

La figure 1 représente, de façon très schématique et sous forme de blocs, un mode de réalisation simplifié d'un microcontrôleur 1 de type carte à puce auquel s'applique plus particulièrement la présente invention. Un tel microcontrôleur 1 comporte une unité centrale de traitement 2 (CPU) communiquant par l'intermédiaire d'un ou plusieurs bus 3 d'adresses, de données et de commandes, avec différentes mémoires. Le microcontrôleur comporte au moins une mémoire 4 (par exemple, une mémoire morte ROM ou une mémoire flash) de stockage de programmes à exécuter, une mémoire vive 5 (RAM) utilisée pendant l'exécution des programmes et, optionnellement, une mémoire 6 non volatile réinscriptible (NVM). La puce 1 comporte également des entrées/sorties (non représentées) vers l'extérieur, que ce soit sous la forme de contacts et/ou d'une antenne de communication.

L'invention sera décrite par la suite en relation avec un exemple d'application aux cartes à puce. On notera toutefois qu'elle s'applique plus généralement à n'importe quel élément électronique contenant un microcontrôleur d'exécution d'un programme, que les mémoires soient ou non intégrées avec le microprocesseur.

Une caractéristique d'un mode de mise en oeuvre de la présente invention est d'affecter à tout ou partie des opérations exécutées par le microprocesseur des poids respectifs différents. Par poids, on entend un nombre qui servira d'incrément ou de décrément à un compteur. Par opération, on entend soit une opération de granularité minimale, c'est-à-dire une opération élémentaire exécutée, pendant une instruction, sur un nombre de bits lié à la capacité du microcontrôleur (par exemple une même opération exécutée sur des octets d'un mot de plusieurs octets dans le cas d'un processeur 8 bits), soit des opérations constituées elles-mêmes de plusieurs opérations élémentaires. Ces opérations peuvent être arithmétiques, logiques ou d'accès (lecture, écriture d'un registre). Par instruction, on entend une commande d'exécution d'au moins une opération un nombre de fois donné.

Une autre caractéristique d'un mode de mise en oeuvre de l'invention est d'utiliser un compteur dont une image est incrémentée ou décrémentée, indépendamment de l'exécution d'une instruction mais en fonction du poids affecté aux opérations exécutées dans l'instruction et du nombre d'exécutions prévu, et d'incrémenter ou décrémenter itérativement le compteur au fur et à mesure de l'exécution des opérations afin de comparer l'état final du compteur obtenu en fin d'instructions par rapport à la valeur attendue calculée à partir de l'image initiale. Le calcul de la valeur attendue s'effectue soit au début de l'exécution, soit pendant, soit après, mais sans être effectué au coup par coup contrairement à l'incrément itératif au fur et à mesure de l'exécution.

L'état initial du compteur n'a aucune importance. Il s'agit donc d'un compteur borné qui tourne en boucle entre des valeurs maximales et minimales. Ces valeurs correspondent de préférence aux valeurs extrêmes de la plage de comptage possible du compteur.

De préférence, les poids respectifs affectés aux opérations sont choisis pour éviter des collisions entre des valeurs obtenues, c'est-à-dire éviter que le poids d'une opération d'un premier type multiplié par son nombre d'exécutions dans une instruction soit égal au poids d'une opération d'un deuxième type par un autre nombre d'exécutions. Par exemple, les poids sont choisis pour être des nombres premiers entre eux de valeurs importantes (supérieures à 200). Il y a alors une probabilité de collision que l'on considère suffisamment faible.

La figure 2 illustre, par une vue schématique et sous forme de blocs, un mode de mise en oeuvre du procédé de contrôle d'exécution d'un programme selon la présente invention. Ce schéma est fonctionnel et ne représente pas forcément les éléments matériels mis en oeuvre, ceux-ci pouvant au moins partiellement correspondre à l'unité centrale 2 exécutant un code logiciel.

Une valeur GCOUNT d'un premier compteur est stockée dans un élément de mémorisation 11. Il peut s'agir soit d'une zone de mémoire vive (5, figure 1), de mémoire non volatile réinscriptible, ou encore d'un registre dédié du microcontrôleur. La valeur GCOUNT évolue en boucle sans avoir besoin d'être réinitialisée à des instants particuliers. Bien entendu, si cette valeur est stockée en mémoire vive, elle sera réinitialisée à chaque coupure de l'alimentation du microcontrôleur 1 lui-même. Dans le cas où elle est stockée en mémoire réinscriptible non volatile 6, elle sera par exemple initialisée au premier démarrage du programme ou périodiquement mais cela n'a aucune incidence sur le fonctionnement de l'invention comme on le comprendra mieux par la suite.

A chaque fois que l'unité centrale 2 appelle l'exécution d'une instruction (bloc 12, INSTR. (OPi, n)), un poids WEIGHTi (i, compris entre 1 et m) de l'opération OPi exécutée par cette instruction est extrait d'une table 13 mémorisée de façon non volatile. L'instruction définit également le nombre n (supérieur ou égal à 1) d'exécutions de l'opération OPi, par exemple, suite à un découpage en octets d'un mot de plusieurs octets. La table 13 peut être stockée en mémoire ROM à la fabrication mais sera, de préférence, stockée dans la mémoire réinscriptible 6 de façon à en permettre une mise à jour.

Dans le cas où toutes les opérations mises en oeuvre par le microprocesseur ne sont pas prises en compte par le contrôle de l'invention, les m opérations dont l'exécution est surveillée peuvent être modifiées en fonction de l'application. Il suffit qu'à chaque début d'instruction, le programme vérifie s'il s'agit d'une opération à surveiller (contenue dans la table 13) et mette alors en oeuvre les étapes de comptage qui seront décrites ci-après.

Avant le début d'exécution de l'instruction, la valeur GCOUNT contenue dans le registre 11 est lue par l'unité centrale 2 et est stockée (par exemple, dans un registre intermédiaire) pour effectuer une estimation de la valeur finale attendue (bloc 14, FINAL ESTIM.) à partir du poids WEIGHTi de l'opération OPi et du nombre n d'exécutions de cette opération dans l'instruction. Le calcul de cette estimation finale (incrément ou décrément de n*WEIGHTi) est effectué n'importe quand par rapport à l'exécution de l'instruction (avant, pendant ou après) en évitant cependant un calcul itératif au fur et à mesure de l'exécution des opérations.

Lors de l'exécution de l'instruction, c'est-à-dire des n opérations OPi identiques, la valeur courante GCOUNT contenue dans le registre 11 est incrémentée (ou décrémentée) de façon itérative du poids WEIGHTi à chaque exécution (bloc 15, ITER INCREM.).

Une fois l'instruction terminée et l'estimation finale calculée, les deux valeurs obtenues sont comparées (bloc 16, COMP). En cas d'identité entre les deux valeurs, on considère que l'instruction s'est exécutée sans perturbation (OK) dans sa séquence. Dans le cas contraire, cela signifie une erreur dans l'exécution du programme (FAIL). Le fait de calculer l'estimation finale de façon indépendante de l'exécution itérative de l'instruction empêche qu'en cas de perturbation pendant cette exécution, les deux résultats soient identiques.

De préférence, le registre 11 de stockage du compteur global GCOUNT est mis à jour à chaque itération (bloc 15) de l'instruction, ce qui réduit à deux le nombre de registres nécessaires pour contenir les deux valeurs de comptage à comparer. En variante, on pourra utiliser un registre intermédiaire supplémentaire pour contenir la valeur mise à jour de façon itérative. Ce sera par exemple le cas si on utilise la valeur d'un compteur utilisé, par ailleurs, à d'autres fins (par exemple, le compteur programme, un compteur d'accès, etc.).

Selon un mode de mise en oeuvre préféré de l'invention, la comparaison entre les résultats attendu et obtenu par l'exécution de l'instruction est effectuée par le système d'exploitation du microcontrôleur soit à la fin de chaque instruction soit périodiquement, pourvu que cet instant corresponde à la fin d'exécution d'une instruction. Les opérations correspondent, de préférence, aux opérations élémentaires susceptibles d'être exécutées par le microcontrôleur.

Plusieurs contrôles peuvent être imbriqués à des niveaux différents dans l'exécution d'un même code logiciel. Par exemple, une vérification de l'exécution correcte de plusieurs instructions successives peut être combinée avec une vérification des exécutions individuelles de ces instructions.

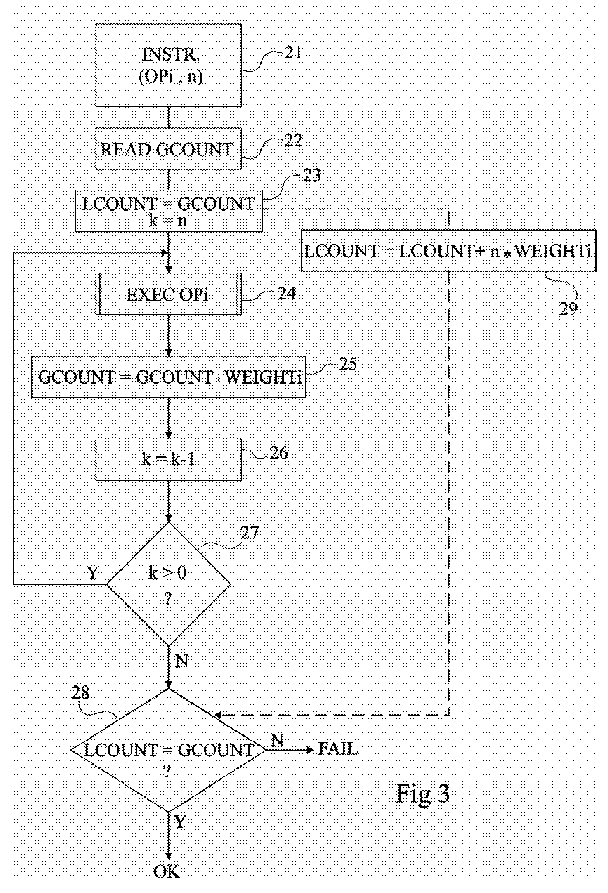

La figure 3 est un organigramme illustrant schématiquement un premier exemple d'exécution d'une instruction par la mise en oeuvre du procédé illustré par la figure 2. On suppose l'exécution d'une instruction INSTR exécutant n fois une opération OPi (bloc 21, INSTR (OPi, n)). On commence (bloc 22, READ GCOUNT) par lire l'état du compteur pour stocker sa valeur (bloc 23, LCOUNT = GCOUNT) dans un registre intermédiaire destiné à contenir l'estimation finale de l'état que doit atteindre le compteur. Dans cette même étape, on initialise un index de boucle k comme étant égal au nombre n d'opérations OPi à exécuter. On entre alors dans une boucle dont chaque itération de rang k consiste à exécuter l'opération OPi (bloc 24, EXEC OPi) puis à incrémenter le compteur GCOUNT du poids d'une exécution (bloc 25, GCOUNT = GCOUNT + WEIGHTi) avant de décrémenter l'index k (bloc 26, k = k-1). Chaque itération se termine par un test (bloc 27, k > 0 ?) conditionnant la sortie de la boucle. Tant que les n opérations n'ont pas été exécutées (sortie Y du bloc 27), on revient sur le bloc 24 pour l'exécution suivante de l'opération OPi. En variante, n'importe quelle boucle à n itérations pourra remplacer l'index k initialisé à la valeur n (par exemple, une initialisation inverse à une valeur nulle ou unitaire, puis une incrémentation jusqu'à atteindre la valeur n-1 ou n).

Une fois que toutes les opérations de l'instruction ont été exécutées (sortie N du bloc 27), la valeur GCOUNT est comparée (bloc 28, LCOUNT = GCOUNT ?) à la valeur LCOUNT, mise à jour séparément (bloc 29, LCOUNT = LCOUNT + n* WEIGHTi), de façon à obtenir l'estimation finale attendue. Le fait que cette estimation soit effectuée indépendamment des opérations OPi est illustré en figure 3 par un pointillé. En cas d'identité entre l'état du compteur et l'état attendu (sortie Y du bloc 28), on considère que l'exécution de l'instruction n'a pas été détournée accidentellement ou volontairement (OK). Dans le cas contraire, le procédé de détection d'erreur de séquencement fournit un signal FAIL (par exemple, un bit drapeau) indicateur d'un risque d'erreur dans le séquencement de l'instruction.

Les suites à donner à une telle détection sont le plus souvent une procédure d'erreur. En pratique, dans le cas d'une carte à puce, une telle procédure consiste à rendre la carte muette. Toutefois, tout autre procédure classique mise en oeuvre en cas de détection d'erreur dans l'exécution d'un programme pourra être utilisée.

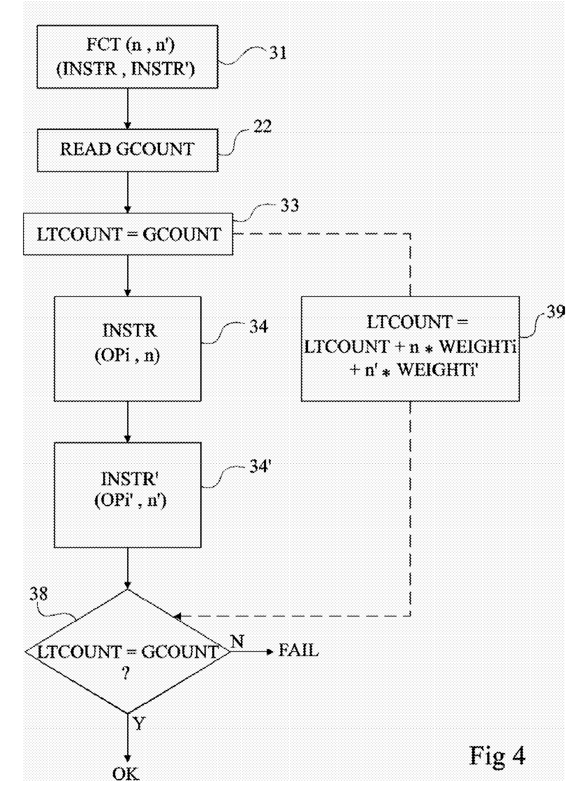

La figure 4 est un organigramme illustrant un deuxième exemple de mise en oeuvre de l'invention dans lequel une fonction FCT de plusieurs instructions (par exemple, deux instructions INSTR et INSTR' exécutant respectivement n opérations OPi et n' opérations OPi') est surveillée par le procédé de contrôle d'exécution.

A l'appel de la fonction (bloc 31, FCT (n, n') (INSTR, INSTR')), le compteur global de valeur GCOUNT est lu (bloc 22, READ GCOUNT). Puis, on initialise un registre intermédiaire avec la valeur de ce compteur (bloc 33, LTCOUNT = GCOUNT). Cette valeur LTCOUNT sert de base à une estimation finale LTCOUNT prenant en compte les deux instructions INSTR et INSTR' (bloc 39, LTCOUNT = LTCOUNT + n*WEIGHTi + n'*WEIGHTi').

Les instructions INSTR et INSTR' sont ensuite exécutées successivement (bloc 34, INSTR (OPi, n) et bloc 34' INSTR' (OPi', n') en reproduisant l'organigramme de la figure 3 pour chacune des instructions. Par conséquent, un registre intermédiaire supplémentaire est utilisé pour la valeur LCOUNT et détecte un éventuel non respect du séquencement au sein de chaque instruction.

A la fin de la deuxième instruction, le contenu du compteur global GCOUNT est comparé (bloc 38, LTCOUNT = GCOUNT ?) à la valeur LTCOUNT mise à jour de façon indépendante dans le bloc 39. Ce test conduit à une décision sur la présence (sortie N, FAIL, du bloc 38) ou l'absence (sortie Y, OK, du bloc 38) d'un risque d'erreur.

En variante, les tests (28, figure 3) ne sont pas mis en oeuvre dans les blocs 34 et 34' et seul un test final est effectué (bloc 38).

Selon une autre variante, le procédé de contrôle est mis en oeuvre à un niveau encore supérieur (par exemple des commandes de plusieurs fonctions, elles-mêmes de plusieurs instructions de plusieurs opérations). Si les contrôles des différents niveaux sont imbriqués (figure 4), cela revient à ajouter un niveau de contrôle. Si seuls les contrôles de niveau supérieurs sont effectués, cela revient à considérer une opération d'un niveau supérieur à celui des opérations élémentaires.

Un avantage de la présente invention est qu'elle permet de détecter dynamiquement un défaut volontaire ou accidentel dans l'exécution d'un programme.

Un autre avantage de l'invention est que sa mise en oeuvre ne requiert que peu de ressources. En effet, il suffit d'une table de correspondance des poids affectés aux différentes opérations (cette table peut même être omise si les incréments/décréments sont directement écris dans le programme), et d'au moins deux espaces de stockage pour les valeurs respectives GCOUNT et LCOUNT du compteur.

Un autre avantage de l'invention est qu'il n'est pas nécessaire de connaître à l'avance la valeur devant être atteinte par le compteur. Seul l'incrément ou décrément (poids de chaque opération) a besoin d'être connu. Il s'agit là d'une différence importante par rapport à un calcul de signature dans lequel la valeur attendue de la signature a besoin d'être connue dès l'origine.

Un autre avantage de l'invention est que le compteur n'a pas besoin d'être réinitialisé à des périodes spécifiques et peut tourner en boucle.

Un autre avantage qui en découle est que le programme de vérification n'a pas besoin d'être modifié en cas de mise à jour du programme à surveiller pourvu que ce dernier appelle le programme de vérification au début des instructions à surveiller en lui fournissant le type d'opération et son nombre d'exécutions. Par conséquent, le procédé de l'invention est indépendant du programme à surveiller.

Bien entendu, la présente invention est susceptible de diverses variantes et modifications qui apparaîtront à l'homme de l'art. En particulier, les choix des poids (incréments/décréments) appliqués aux différentes opérations sont à la portée de l'homme du métier en fonction de l'application à partir des indications fonctionnelles données ci-dessus. De plus, le choix des opérations à surveiller dans le cas où toutes ne sont pas prises en compte par la mise en oeuvre de l'invention est également à la portée de l'homme du métier. Enfin, la mise en oeuvre pratique de l'invention par des moyens logiciels pour exécuter le procédé de vérification est à la portée de l'homme du métier et fait appel à des notions de programmations habituelles.

## Revendications

1. Procédé de contrôle automatique de l'exécution d'un programme par un microprocesseur (2), **caractérisé en ce qu'**il consiste à :
mémoriser un état initial d'un compteur avant l'exécution d'au moins une instruction (INSTR) consistant à exécuter un nombre de fois donné (n) au moins une même opération (OPi) ;
à chaque exécution de l'opération, incrémenter ou décrémenter le compteur d'un poids (WEIGHTi) affecté à l'opération ; et
en fin d'instruction, comparer l'état final du compteur à une valeur (LCOUNT, LTCOUNT) estimée en majorant, respectivement minorant, son état initial d'un multiple du poids affecté à l'opération correspondant au nombre d'exécutions prévu de cette opération dans l'instruction.

2. Procédé selon la revendication 1, dans lequel ladite valeur estimée (LCOUNT, LTCOUNT) est obtenue indépendamment de l'exécution de l'instruction (INSTR).

3. Procédé selon la revendication 1 ou 2, dans lequel les poids (WEIGHTi) affectés à différentes opérations (OPi) sont choisis pour être des nombres premiers entre eux.

4. Procédé selon l'une quelconque des revendications 1 à 3, dans lequel ledit compteur (GCOUNT) n'est pas initialisé au début d'une instruction.

5. Procédé selon l'une quelconque des revendications 1 à 4, dans lequel le nombre (n) d'exécutions de l'opération (OPi) correspond aux nombres d'octets devant être traités par l'opération pour exécuter l'instruction sur un mot de plusieurs octets.

6. Microcontrôleur comportant au moins un microprocesseur (2), **caractérisé en ce qu'**il comporte des moyens pour exécuter le procédé selon l'une quelconque des revendications 1 à 5.

7. Carte à puce comportant un microcontrôleur selon la revendication 6.
